**Europäisches Patentamt**

**European Patent Office**

**Office européen des brevets**

(19)

(11) Veröffentlichungsnummer: **0 223 219 B1**

(12) **EUROPÄISCHE PATENTSCHRIFT**

(45) Veröffentlichungstag der Patentschrift:
05.06.91 Patentblatt 91/23

(51) Int. Cl.⁵: **G01N 21/59,** G01N 21/35,
B23K 35/36

(21) Anmeldenummer: 86115891.3

(22) Anmeldetag: 15.11.86

(54) **Verfahren und Vorrichtung zum Bestimmen des Feststoffgehalts in Flussmitteln automatischer Lötmaschinen.**

(43) Veröffentlichungstag der Anmeldung:
27.05.87 Patentblatt 87/22

(45) Bekanntmachung des Hinweises auf die
Patenterteilung:
05.06.91 Patentblatt 91/23

(84) Benannte Vertragsstaaten:
AT BE CH DE ES FR GB GR IT LI LU NL SE

(56) Entgegenhaltungen:
EP-A- 0 116 192
WO-A-81/01380
DE-A- 3 537 368
DE-B- 2 949 006

(56) Entgegenhaltungen:
PATENT ABSTRACTS OF JAPAN, Band 10, Nr.
333 (M-534)(2389), 12 november 1986 & JP - A -
61 137 666
PATENT ABSTRACTS OF JAPAN, Band 10, Nr.
134 (M-479)(2191), 17 Mai 1986 & JP - A - 60 257
966

(73) Patentinhaber : alpha grillo-lötsysteme GmbH
Buschstrasse 95 Postfach 11 01 26
W-4100 Duisburg 11 (DE)

(72) Erfinder : Froebel, Gerd, Dipl.-Ing.
Sengelsweg 29
W-4000 Düsseldorf 31 (DE)

(74) Vertreter : Werner, Hans-Karsten, Dr. et al
Deichmannhaus am Hauptbahnhof
W-5000 Köln 1 (DE)

## Beschreibung

### Stand der Technik

Die Erfindung geht aus von einem Verfahren zum Bestimmen des Feststoffgehalts in Flußmitteln automatischer Lötmaschinen bekannter Art.

Bei der Produktion neuzeitlicher Elektronikgeräte werden die elektronischen Bauteile zu Gruppen zusammengefaßt und auf eine mit Leiterbahnen bedruckte Schaltkarte gelötet. Dieses Löten wird in der Serienprodukten mit Hilfe von Lötmaschinen durchgeführt. Zu diesem Zweck werden die zu lötenden Flächen zunächst mit einem Flußmittel benetzt, und zwar entweder durch Besprühen oder durch Einschäumen, und dann über einer Lötmittelwelle mit dem Lot in Berührung gebracht.

Gleichmäßige Lötergebnisse können nur mit einer gleichbleibenden Flußmittelqualität erreicht werden. Die zum Löten in der Elektronik verwendeten Flußmittel umfassen zwei Komponenten. Es sind dies die Feststoff- oder Wirkstoffanteile, wie Kolophonium, organische Salze und Säuren, Aktivatoren und Additive, auf der einen Seite und das Verdünnungssystem, nämlich ein Gemisch von verschiedenen organischen Lösungsmitteln mit einem gewissen Wasseranteil, auf der anderen Seite. Schwankungen in der Wirkstoffkonzentration wirken sich auf das Lötergebnis aus. Man ist deshalb bestrebt, die Wirkstoffkonzentration im Flußmittel konstant zu halten. Während des Betriebs der Lötmaschine nehmen die Leiterplatten Flußmittel auf und transportieren es weiter. Gleichzeitig verdunstet der Verdünner, damit nimmt die Dichte des Flußmittels und der Anteil der Festkörper zu. Um eine optimale Wirkstoffkonzentration beizubehalten, wird deshalb in bestimmten zeitlichen Abständen der Zustand des Flußmittels kontrolliert und, wenn nötig, Verdünner zugefügt.

Die Bestimmung des Festkörpergehalts im Flußmittel, das ja eine Kolophoniumlösung ist, gestaltet sich sehr schwierig. Das Kolophonium enthält flüchtige Bestandteile, die bei verschieden hohen Temperaturen in unterschiedlichen Mengen verdunsten können. Ein Meßergebnis kann dadurch verfälscht werden. Die Bestimmung der nicht flüchtigen Anteile ist ein verhältnismäßig mühsames und langwieriges Verfahren, das nur in einem Labor durchgeführt werden kann. Damit ist ein solches Verfahren für eine laufende Kontrolle einer in Betrieb befindlichen Lötmaschine nicht geeignet.

Allgemein gebräuchlich für die laufende Kontrolle des Flußmittels einer arbeitenden Lötmaschine ist die Messung der Dichte des Flußmittels, wie zum Beispiel in DE-B-2 949 006 und WO-A-81/01380. Dieses Verfahren weist jedoch eine Reihe von Nachteilen auf. Bei allen Dichtemessungen geht die Temperatur des Meßguts sehr stark in das Meßergebnis ein. Das zu prüfende Flußmittel muß daher genau auf eine bestimmte Meßtemperatur gebracht werden. Elektronische Dichtemeßgeräte, die innerhalb bestimmter Temperaturgrenzen Abweichungen von der Meßtemperatur kompensieren können, sind daher meist trotzdem mit einer Aufheizvorrichtung ausgerüstet. Im übrigen ist die Dichtemessung lediglich eine indirekte Meßmethode für die Konzentration des Wirkstoff- oder Festkörpergehalts in einem Flußmittel.

Ein weiteres Problem stellt der Wassergehalt des Flußmittels dar. Die im Verdünner enthaltenen organischen Lösungsmittel, meist Alkohole, sind stark hygroskopisch, sie versuchen also, so viel Wasserdampf wie möglich aufzunehmen. Während des Benetzungsvorgangs der Schaltkarte mit Flußmittel findet also eine Anreicherung des Flußmittels mit Wasser statt. Diese Anreicherung ist umso stärker je höher die relative Luftfeuchtigkeit ist. Durch die Wasseraufnahme ändert sich selbstverständlich die Dichte des Verdünners.

Durch die Wasseraufnahme verändert sich auch der Siedepunkt des Alkohol-Wasser-Gemischs und damit die Verdampfungswärme. Mit zunehmendem Wassergehalt kann normalerweise der Verdünner nicht mehr entfernt werden, dies führt zu einem nicht ordnungsgemäßen Arbeiten der Lötmaschine.

Automaschine Lötanlagen enthalten meist eine automatische Dichtekorrektur, die aber eine Zunahme des Wassergehalts im allgemeinen nicht erkennt. Durch zunehmenden Wassergehalt steigt nämlich auch die Dichte des Flußmittels, durch die automatische Dichtekorrektur wird dann einfach mehr Verdünner zugeführt. Die Folge davon ist dann aber eine Verminderung der zu einem ordnungsgemäßen Betrieb erforderlichen Festkörper- oder Wirkstoffanteile im Flußmittel. Durch den erhöhten Verdünnergehalt kann dann sogar der Wassergehalt noch weiter ansteigen. Die Folge davon sind dann nicht nur mangelhafte Lötstellen, sondern auch nach einiger Zeit auftretende Korrosionserscheinungen an Bauelementen.

Da die Messung und Steuerung lediglich der Dichte des Flußmittels wegen der nicht erkennbaren Wasseraufnahme keine Garantie für eine gleichbleibende gute Qualität der Lötung bringen kann, hat man versucht, andere Meßmethoden vorzuschlagen. Darunter finden sich beispielsweise eine fotometrische Messung in einer Durchlaufküvette oder eine kontinuierliche Bestimmung des Brechungsindex. Diese Meßverfahren haben sich aber in der Praxis als nicht durchführbar erwiesen.

Auch die getrennte Messung des Wassergehalts ist zwar in einem Labor nicht schwierig, an einer im Betrieb befindlichen Lötmaschine jedoch nicht anwendbar. Zum Bestimmen des Wassergehalts in Flußmitteln bietet sich weiter das Ermitteln der elektrischen Leitfähigkeit an. Im allgemeinen besteht eine lineare Beziehung zwischen der Leitfähigkeit des Flußmittels und seinem Wassergehalt. Diese Beziehung ist auch in weiten Bereichen unabhängig vom Festkörpergehalt des Flußmittels. Nachteilig dabei ist jedoch, das Verunreinigungen des Flußmittels, die im Produktionsprozeß auftreten, das Meßergebnis verfälschen können. Solche Verunreinigungen rühren beispielsweise von Lacken der Leiterplatte, von aus den Leiterbahnen gelöstem Kupfer oder aus Blei-Zinn-Schichten her. Aus diesem Grund ist deshalb auch die Bestimmung des Wassergehalts des Flußmittels über die Messung seiner Leitfähigkeit nicht allgemein anwendbar.

Vorteile der Erfindung

Das erfindungsgemäße Verfahren mit den kennzeichnenden Merkmalen des Hauptanspruchs hat demgegenüber den Vorteil, daß der Feststoffgehalt eines Lötmittels auf einem direkten Weg bestimmt wird, also nicht auf einem Umweg durch das Messen von abgeleiteten Größen. Als weiterer Vorteil ist anzusehen, daß nur eine kleine Probemenge zum Durchführen der Messung erforderlich ist. Die Probemenge wird in einen elektromagnetischen Strahlengang gebracht und die Durchlässigkeit, also die Transmission, ermittelt.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist, daß durch das Zuführen einer Prozeßflüssigkeit in kleinen Dosen die Durchlässigkeit der Probemenge in Abhängigkeit von der zugegebenen Prozeßflüssigkeitmenge gemessen werden und damit weitere Aussagen über den Zustand und die Qualität des Flußmittels gemacht werden können. Zu diesen weiteren Aussagen gehören beispielsweise Aussagen über den Verschmutzungsgrad und den Wassergehalt des Lötmittels.

Weiter ist eine Bestimmung des Feststoffgehalts des Flußmittels unabhängig von dem Wassergehalt des Flußmittels möglich.

Von Vorteil ist weiter, daß der Soll-Feststoffgehalt des Flußmittels als ein Normal vorgegeben werden kann. Bei Abweichungen der Meßwerte von den Normalwerten kann durch eine verhältnismäßig einfache Umrechnung die Verdünnermenge angegeben werden, die der gesamten in der Lötmaschine verwendeten Flußmittelmenge hinzuzufügen ist.

Durch die erfindungsgemäße Vorrichtung mit den kennzeichnenden Merkmalen des Nebenanspruchs kann das Verfahren in vorteilhafter Weise durchgeführt werden. Mit Hilfe der einzelnen Bauelemente der Vorrichtung kann jeder einzelne Meßpunkt und/oder eine ganze Meßkurve erkennbar gemacht werden.

Durch die in den Unteransprüchen zum Nebenanspruch aufgeführten Maßnahmen sind vorteilhafte Weiterbildungen und Verbesserungen der im Nebenanspruch angegebenen Vorrichtung möglich.

Die Dosiereinheit umfaßt einen Vorratsbehälter für die Prozeßflüssigkeit und eine vorzugsweise pneumatische Ventileinrichtung, mit der sich die Prozeßflüssigkeit tropfenweise zumessen läßt. Die Tropfen werden mit Hilfe einer Lichtschrankeneinheit gezählt. Dadurch lassen sich in einfacher Weise die einzelnen Meßpunkte erfassen.

Die erfaßten Meßpunkte werden in vorteilhafter Weise mit Hilfe einer Kurvenschreibereinrichtung in einer Meßkurve protokolliert.

Für eine gute Durchmischung der Meßproben und damit für ein genaues Meßergebnis sorgt eine Umwälzanordnung.

Eine Reihe von Speicher- und Recheneinheiten dient zur Verarbeitung der einzelnen Meßergebnisse, also zum Umrechnen der einzelnen Meßgrößen, zum Vorgeben von Sollwerten und zum Vergleichen der Istwerte mit den Sollwerten, zum Festlegen typischer Strahlungsanteilwerte für bestimmte Meßpunkte und zum Festlegen von Eichfaktoren sowie zum Einbringen weiterer Rechenfunktionen.

Eine Anzeigevorrichtung zeigt während und nach Abschluß der Messung die Werte an, die den Benützer der Vorrichtung interessieren. Eine vorteilhafte Vereinfachung der Anzeigevorrichtung ist dadurch möglich, daß beispielsweise durch Knopfdruck mehrere Meßstellen auf einen einzigen Signalgeber geschaltet werden können.

Weitere Merkmale und Vorteile der Erfindung ergeben sich aus der Beschreibung im Zusammenhang mit der Zeichnung, in der ein Ausführungsbeispiel schematisch dargestellt ist. Die Merkmale können auch einzeln oder in beliebiger Kombination verwirklicht werden.

Zeichnung

Ein Ausführungsbeispiel der Erfindung ist in der Zeichnung dargestellt und in der nachfolgenden Beschreibung näher erläutert. Figur 1 zeigt ein Blockschaltbild der erfindungsgemäßen Vorrichtung, Figur 2 schematisch eine Frontansicht eines nach der Erfindung aufgebauten Meßgeräts und Figur 3 ein Beispiel für eine Transmissionskurve.

Beschreibung des Ausführungsbeispiels

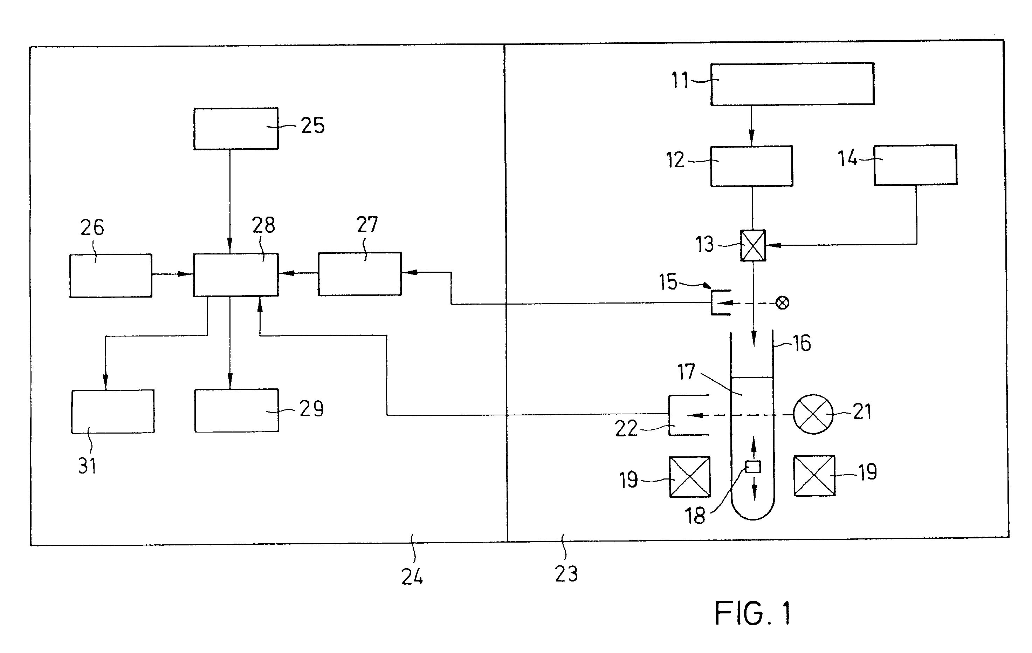

Im Blockschaltbild nach Figur 1 ist ein Vorratsbehälter 11 mit einer Prozeßflüssigkeit gefüllt. Als Prozeßflüssigkeit dient vorzugsweise Kaliumhydroxyd. Der Vorratsbehälter ist zweckmäßigerweise mit einer Füllstandsüberwachungsvorrichtung versehen. Dem Vorratsbehälter 11 ist eine Dosiereinheit 12 nachgeschaltet, die eine Ausgabeeinheit für eine integrale Dosiermenge umfaßt. Stromabwärts der Dosiereinheit 12 ist ein pneumatisches Ventil 13 angeordnet. Gesteuert wird das Ventil 13 mit Hilfe einer Ventilansteuervorrichtung 14. Am Ausgang des Ventils 13 tritt die Prozeßflüssigkeit tropfenweise aus. Die austretenden Tropfen werden mit Hilfe einer Lichtschrankenanordnung 15 gezählt. Die Tropfen fallen schließlich in ein Reagenzglas 16. Während eines Meßvorgangs ist das Reagenzglas 16 mit einer Mischung 17 aus Flußmittel und Prozeßflüssigkeit gefüllt. Im Reagenzglas 16 befindet sich weiter ein vorzugsweise kunststoffüberzogener Magnet 18 zur Umwälzung der Mischung 17. Auf der Höhe des Magnets 18 ist außerhalb des Reagenzglases 16 eine Spulenanordnung 19 vorgesehen, die zur Erzeugung eines oszillierenden Magnetfelds dient. Das Magnetfeld dient zur oszillierenden Verstellung des Magnets 18. Im Bereich der Mischung 17 im Reagenzglas 16 ist eine Leuchtdiode 21 angeordnet, die vorzugsweise im Infrarotbereich liegendes Licht ausstrahlt. Auf der der Leuchtdiode 21 gegenüberliegenden Seite des Reagenzglases 16 ist eine Fotodiode 22 zur Messung des Strahlungsanteils, der die Mischung 17 durchdrungen hat, vorgesehen. Die Anordnung mit der Leuchtdiode 21 und der Fotodiode 22 dient also zur Transmissionsmessung. Alle diese bisher geschilderten Bauteile sind beim Ausführungsbeispiel in einem Meßbereich 23 des kompletten Meßgeräts untergebracht.

In einem Auswertebereich 24 sind die Recheneinheiten und Speichereinheiten des Meßgeräts untergebracht. Ein Parameterspeicher 25 gibt den Sollgehalt der Feststoffanteile im Flußmittel vor. Weiter ist im Parameterspeicher 25 die Flußmittelgesamtmenge in der Lötmaschine gespeichert. Weiter ist ein Speicher 26 für Eichfaktoren vorgesehen. Einer der Eichfaktoren dient zur Bestimmung des Feststoffgehalts aus der verbrauchten Prozeßflüssigkeit. Ein anderer Eichfaktor dient zur Umrechnung zwischen der Tropfenzahl und der Tropfenmenge der Prozeßflüssigkeit. Ein weiterer Eichfaktor dient der Einstellung der für bestimmte Meßpunkte typischen Transmission. Ein typischer Meßpunkt, nämlich der Umschlagpunkt wird bei der Funktionsbeschreibung des Meßgeräts vorgestellt. Eine Umrechnungseinheit 27 dient zur Umrechnung zwischen der Anzahl der Prozeßflüssigkeitstropfen und der geförderten Prozeßflüssigkeitsmenge. An den Eingang dieser Umrechnungseinheit 27 ist der Ausgang der Lichtschrankenanordnung 15 angeschlossen. Eine Recheneinheit 28 dient zur Berechnung des spezifischen Feststoffgehalts des Flußmittels und zur Ermittlung der erforderlichen Nachfüllmenge von frischem Flußmittel. Die Recheneinheit 28 weist vier Eingänge auf. An den ersten Eingang ist der Ausgang des Eichfaktorenspeichers 26 angeschlossen, an den zweiten Eingang der Ausgang des Programmspeichers 25, an den dritten Eingang der Ausgang der Umrechnungseinheit 27 und an den vierten Eingang der Ausgang der Leuchtdioden – Fotodioden-Anordnung 21, 22. Der Recheneinheit 12 nachgeschaltet ist eine Anzeigevorrichtung 29. Diese Anzeigevorrichtung dient zum Anzeigen des spezifischen Feststoffgehalts, also des Istwerts, und des Sollwerts für den Feststoffgehalt. Beim Ausführungsbeispiel ist dafür ein einziger Satz von Leuchtdioden vorgesehen, die Umschaltung von der Istwertanzeige zur Sollwertanzeige erfolgt durch Tastendruck. Die Anzeigevorrichtung dient weiter zum Anzeigen der erforderlichen Nachfüllmenge an Verdünner oder an Konzentrat und außerdem der Gesamtmenge des in der Lötmaschine befindlichen Flußmittels. Auch diese beiden Werte können durch einen einzigen Satz von Leuchtdioden angezeigt werden, der Leuchtdiodensatz wird beim Ausführungsbeispiel durch Tastendruck wahlweise auf eine der beiden Meßstellen geschaltet.

Das Verfahren und die Vorrichtung zum Bestimmen des Feststoffgehalts in Flußmitteln automatischer Lötmaschinen wird im folgenden beschrieben.

Aus der automatischen Lötmaschine wird eine bestimmte Menge des Flußmittels entnommen. Diese bestimmte Menge des Flußmittels wird in das Reagenzglas 16 gefüllt. Das Reagenzglas 16 mit dem eingefüllten Flußmittel wird von einer Seite her mit der Leuchtdiode 21 bestrahlt. Der auf der gegenüberliegenden Seite des Reagenzglases 16 ankommende Strahlungsanteil und damit die Transmission wird mittels der Fotodiode 22 gemessen.

Zur Bestimmung des Feststoffgehalts im Flußmittel wird eine vorher festgelegte Menge einer Prozeßflüssigkeit zugeführt. Beim Ausführungsbeispiel wird als Prozeßflüssigkeit Kalilauge verwendet. Die Umwälzanordnung, die aus der Spulenanordnung 19 und dem Magnet 18 besteht, sorgt für eine gleichmäßige Durchmischung des Gemisches 17 aus dem Flußmittel und der Prozeßflüssigkeit.

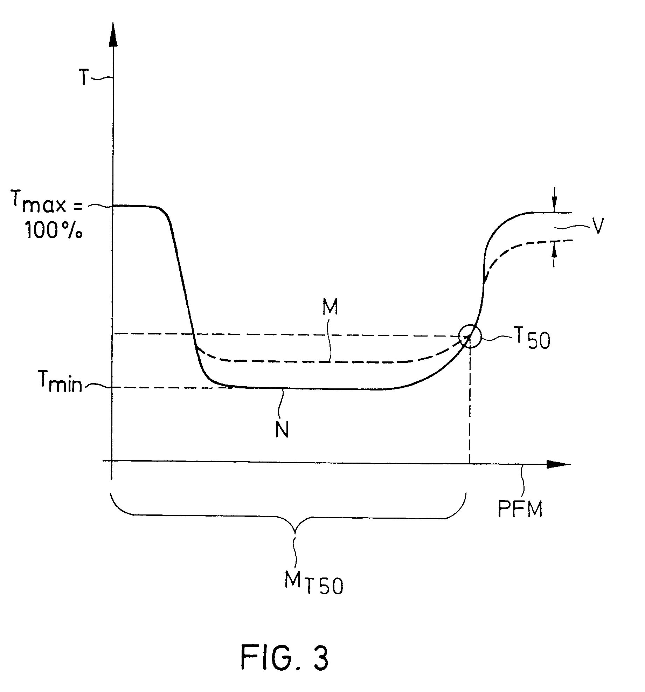

Die Zuführung von Prozeßflüssigkeit zum Flußmittel ändert die Transmission des Gemisches. Ein typischer Kurvenverlauf ist in Figur 3 gezeigt.

Bei der Zugabe von Prozeßflüssigkeit nimmt die Transmission zunächst ab. Bei weiterer Zugabe von Prozeßflüssigkeit nimmt die Transmission wieder zu. Das Gemisch 17 wird im Verlauf der Zugabe von Prozeßflüssigkeit also zunächst trübe und dann wieder durchsichtiger.

Aus dem in Figur 3 gezeigten Kurvenverlauf kann man einige charakteristische Transmissionswerte entnehmen, beispielsweise die minimale oder die maximale Transmission oder eine Fünfzig-Prozent-Transmission $T_{50}$. Diese Werte erlauben durch eine entsprechende Auswertung, den Feststoffgehalt, den Wassergehalt und den Verschmutzungsgehalt zu bestimmen. Diese durch die Auswertung gewonnenen Werte geben über die Verwendbarkeit des Flußmittels Auskunft. Durch eine Multiplikation mit einem konstanten Faktor beispielsweise kann aus der zugefügten Prozeßflüssigkeitsmenge der Feststoffgehalt im Flußmittel errechnet werden.

In den Parameterspeicher 25 wird vor Inbetriebnahme der Vorrichtung der Sollgehalt der Feststoffanteile im Flußmittel und die in der Lötmaschine verwendete Flußmittelmenge eingegeben. In der Recheneinheit 28 wird der tatsächlich gemessene Istgehalt mit dem einprogrammierten Sollgehalt verglichen. Aufgrund des Vergleichsergebnisses kann mit Hilfe des erfindungsgemäßen Verfahrens und der zugehörigen Vorrichtung die erforderliche Nachfüllmenge an verdünnter Flüssigkeit berechnet und angezeigt werden.

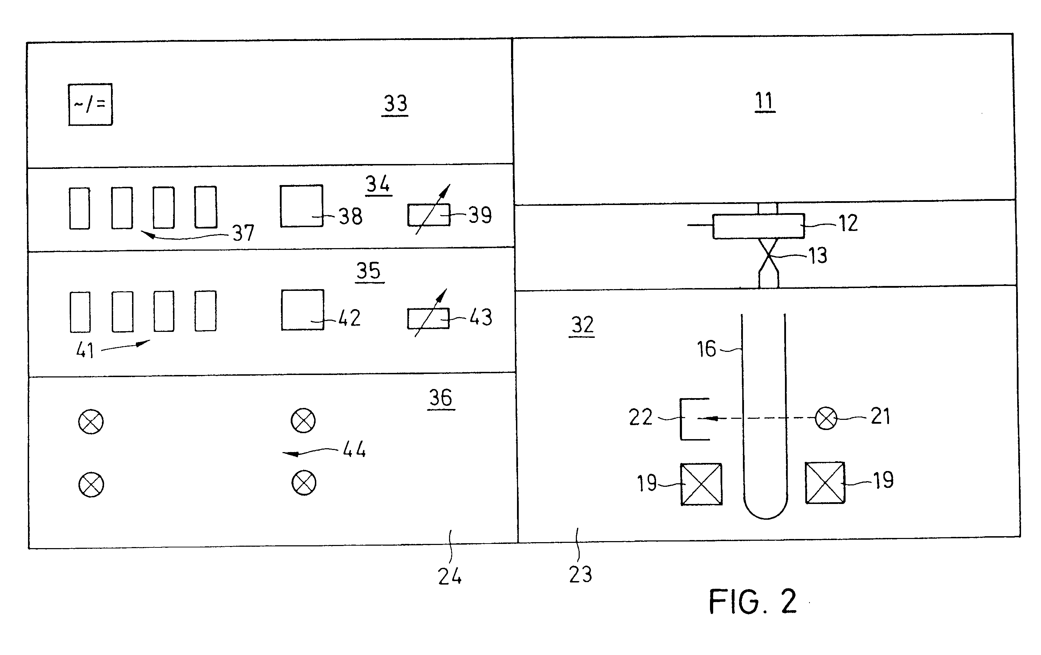

In Figur 2 ist ein Ausführungsbeispiel für ein Gerät zu der erfindungsgemäßen Vorrichtung gezeigt. Gleiche Bauteile sind mit den gleichen Bezugszeichen wie zu Figur 1 bezeichnet.

Im Meßbereich 23 ist der Vorratsbehälter 11, die Dosiereinheit 12 mit dem Ventil 13 und ein Fach 32 mit der Strahleranordnung 21, 22 und der Umwälzvorrichtung 19 zu sehen. Das Fach 32 dient zur Aufnahme des Reagenzglases 16. In dem Auswertebereich 24 des Geräts befindet sich ein Netzteil 33 und die hier nicht gezeigten Speicher- und Recheneinheiten. Auf der Frontseite des Auswertebereichs ist jedoch ein Satz von Anzeigevorrichtungen 34, 35 und 36 zu sehen. Die Anzeigevorrichtung 34 umfaßt einen Satz 37 von Leuchtdioden, eine Drucktaste 38 und einen Einstellregler 39. Die Anzeigevorrichtung 35 umfaßt einen Satz 41 von Leuchtdioden, eine Drucktaste 42 und einen Einstellregler 43. Die Anzeigevorrichtung 36 weist beispielsweise vier Signallampen oder Leuchtdioden zur Anzeige weiterer Verfahrensschritte an.

Vor Beginn der Messung wird das Regenzglas 16 mit der erwähnten bestimmten Menge des Flußmittels gefüllt und in das Fach 32 gestellt. Während der Messung läßt sich am Leuchtdiodensatz 37 der Istwert des Feststoffgehalts im Flußmittel ablesen. Durch einen Druck auf die Taste 38 läßt sich der zugehörige Sollwert zum Vergleich heranziehen. Der Einstellregler 39 dient zur Eichung des Geräts.

Der Leuchtdiodensatz 41 zeigt die erforderliche Nachfüllmenge an Verdünner oder gegebenenfalls an Konzentrat an. Durch Tastendruck läßt sich der Leuchtdiodensatz 41 auf die Anzeige der Gesamtmenge des Flußmittels in der Lötmaschine umschalten. Der Einstellregler 43 dient auch hier zur Eichung.

Die beim Ausführungsbeispiel vorhandenen vier Anzeigelampen dienen zur Signalisierung beispielsweise folgender Daten : 'Prozeß läuft', 'Prozeßende', 'KOH nachfüllen', 'Prozeßabbruch'.

In Figur 3 ist der oben schon erwähnte typische Verlauf der Transmission in Abhängigkeit von der zugegebenen Prozeßflüssigkeitsmenge gezeigt. Auf der Ordinate ist die Transmission T aufgetragen, auf der Abszisse die Prozeßflüssigkeitsmenge PFM. Die ausgezogene Kurve N zeigt den typischen Normalverlauf für die gegebenen verwerdeten Materialien. Die gestrichelte Kurve M dagegen zeigt eine Meßkurve für ein schon gebrauchtes Flußmittel. Die Meßkurve M verläuft flacher, wenn der Wassergehalt im Flußmittel höher ist. Die Meßkurve M erreicht also nicht den Transmissions-Minimalwert $T_{min}$ der Normalkurve N. Für hohe Zugabewerte an Prozeßflüssigkeitsmenge PFM erreicht die Meßkurve M nicht die maximale Transmission $T_{max}$ der Normalkurve N. Die Differenz zwischen der Normalkurve N und der Meßkurve M ist ein Maß für den Verschmutzungsgrad V. Rückschlüsse auf die Qualität des Flußmittels lassen sich auch aus der Lage des Umschlagpunkts $T_{50}$ ziehen. Der Umschlagpunkt $T_{50}$ liegt etwa in der Mitte zwischen $T_{max}$ und $T_{min}$. Ein Aussagewert kommt der zugefügten Menge $M_{T50}$ an Prozeßflüssigkeit zu, die zum Erreichen dieses Umschlagpunkts $T_{50}$ erforderlich ist.

## Ansprüche

1. Verfahren zum Bestimmen des Feststoffgehalts in Flußmitteln automatischer Lötmaschinen, gekennzeichnet durch folgende Schritte :
   – Einer Lötmaschine wird eine bestimmte Menge des Flußmittels entnommen,
   – die Flußmittelmenge wird in ein lichtdurchlässiges Probegefäß (16) eingefüllt,
   – das Probegefäß (16) mit der eingefüllten Flußmittelmenge wird mit einer Strahlung aus einer elektromagnetischen Strahlungsquelle (21) durchstrahlt,
   – die Intensität des durch das Gefäß (16) hindurchgetretenen Strahlungsanteils (T) wird mit einem Strahlungsempfänger (22) gemessen,
   – der vom Empfänger (22) gemessene Strahlungsanteil (T) wird mit einem vorgegebenen Normwert zum Ermitteln eines Vergleichswerts verglichen.

2. Verfahren nach Anspruch 1, gekennzeichnet durch folgende Schritte :
   – Der Flußmittelmenge im Probegefäß (16) wird eine vorher festgelegte Menge einer Prozeßflüssigkeit zugeführt,
   – der danach vom Strahlungsempfänger (22) gemessene Strahlungsanteil (T) wird mit einem vorgegebenen weiteren Normwert zum Ermitteln eines weiteren Vergleichswerts verglichen.

3. Verfahren nach Anspruch 2, gekennzeichnet durch folgende Schritte :
   – Die vorher festgelegte Prozeßflüssigkeitsmenge wird in vorgegebenen Zeitabständen fortlaufend zugeführt,
   – der jeweils danach vom Strahlungsempfänger (22) gemessene Strahlungsanteil (T) wird mit einem jeweils zugehörigen Normwert zum Ermitteln eines jeweils zugehörigen Vergleichswerts verglichen.

4. Verfahren nach Anspruch 3, dadurch gekennzeichnet, daß die einzelnen nach jeder Zugabe einer Prozeßflüssigkeitsmenge ermittelten diskreten Vergleichswerte zu ihrer Auswertung in einem Protokoll festgehalten werden.

5. Verfahren nach einem der vorhergehenden Ansprüche, dadurch gekennzeichnet, daß als Strahlungsquelle (21) ein Infrarotstrahler verwendet wird.

6. Verfahren nach Anspruch 5, dadurch gekennzeichnet, daß als Strahlungsempfänger (22) eine infrarotempfindliche Fotodiode verwendet wird.

7. Verfahren nach einem der vorhergehenden Ansprüche, dadurch gekennzeichnet, daß der ermittelte Satz von Vergleichswerten zum Steuern der dem gesamten in der Lötmaschine verwendeten Lötmittel zuzuführenden Verdünnermenge/Konzentratmenge dient.

8. Verfahren nach einem der vorhergehenden Ansprüche, dadurch gekennzeichnet, daß das Ermitteln von Sätzen von Vergleichswerten und gegebenenfalls das Steuern der Verdünner-/Konzentrat-Mengenzugabe in vorgegebenen Zeitabständen wiederholt wird.

9. Vorrichtung zur Durchführung des Verfahrens nach einem der vorhergehenden Ansprüche, gekennzeichnet durch

– ein Entnahmesystem zum Entnehmen einer bestimmten Menge des Flußmittels aus der Lötmaschine,

– ein als Probegefäß (16) dienendes Reagenzglas,

– einen Infrarotstrahler (21),

– eine infrarotempfindliche Fotodiode (22),

– eine Zugabevorrichtung (11 bis 14) zum Zugeben einer vorher festgelegten Prozeßflüssigkeitsmenge,

– eine Vergleichsvorrichtung (12) zum Vergleichen von Sollwert und Istwert an Prozeßflüssigkeitsmenge,

– eine Anzeigevorrichtung (34, 35, 36) zum Anzeigen des Meßergebnisses.

10. Vorrichtung nach Anspruch 9, dadurch gekennzeichnet, daß die Zugabevorrichtung eine Dosiereinheit (12) mit einem Vorratsbehälter (11) für die Prozeßflüssigkeit und eine Ventileinrichtung (13, 14) zum tropfenweisen Zumessen der Prozeßflüssigkeit umfaßt.

11. Vorrichtung nach Anspruch 10 dadurch gekennzeichnet, daß die Zugabevorrichtung (11 bis 14) weiter eine Lichtschrankeneinheit (15) zum Zählen der Tropfen der Prozeßflüssigkeit umfaßt.

12. Vorrichtung nach einem der Ansprüche 9 bis 11, dadurch gekennzeichnet, daß als Prozeßflüssigkeit Kaliumhydroxyd dient.

13. Vorrichtung nach einem der Ansprüche 9 bis 12, dadurch gekennzeichnet, daß zum fortlaufenden Festhalten der protokollierten Vergleichswerte eine Kurvenschreibereinrichtung vorgesehen ist.

14. Vorrichtung nach einem der Ansprüche 9 bis 13, dadurch gekennzeichnet, daß das Probegefäß (16) mit einer Umwälzanordnung (18, 19) aus einem außerhalb des Probegefäßes (16) ortsfest angebrachten Magnetspulensystem (19) und einem im Probegefäß (16) verstellbar gelagerten Magnetstück (18) versehen ist.

15. Vorrichtung nach einem der Ansprüche 10 bis 14, dadurch gekennzeichnet, daß die Tätigkeit der Zugabevorrichtung (11 bis 14) beim Erreichen einer vorbestimmten zugeführten Prozeßflüssigkeitsmenge stoppbar ist.

16. Vorrichtung nach einem der Ansprüche 9 bis 15, dadurch gekennzeichnet, daß zur Auswertung der protokollierten Vergleichswerte mindestens ein Teil folgender Bausteine vorgesehen ist:

– Eine Umrechnungsstufe (27) zum Umrechnen der Anzahl der Prozeßflüssigkeitstropfen in die geforderte Prozeßflüssigkeitsmenge,

– ein Parameterspeicher (25) zum Vorgeben des Sollgehalts der Feststoffanteile im Flußmittel und/oder der Flußmittelgesamtmenge in der Lötmaschine,

– ein Eichfaktorenspeicher (26) für die Eichfaktoren zum Bestimmen des Feststoffgehalts aus der verbrauchten Prozeßflüssigkeit und/oder zur Umrechnung von Tropfenzahl in Flüssigkeitsmenge und/oder zur Einstellung eines typischen Strahlungsanteilwerts ($T_{50}$),

– eine Recheneinheit (28) zum Berechnen eines normierten Flußmittel-Feststoffgehalts und/oder zum Ermitteln der erforderlichen Flußmittel-Nachfüllmenge.

17. Vorrichtung nach Anspruch 16, dadurch gekennzeichnet, daß zum Anzeigen einer erfolgten Auswertung je eine Anzeigevorrichtung für wenigstens einen Teil folgender Meßwerte vorgesehen ist:

– für den Ist-Feststoffgehalt,

– für den Soll-Feststoffgehalt,

– für die Nachfüllmenge an Verdünner,

– für die Nachfüllmenge an Konzentrat,

– für die Gesamtmenge des Flußmittels in der Lötmaschine.

18. Vorrichtung nach Anspruch 17, dadurch gekennzeichnet, daß als Anzeigevorrichtungen Leuchtdiodensätze (37, 41) dienen.

19. Vorrichtung nach Anspruch 17 oder 18, dadurch gekennzeichnet, daß für die Anzeige von Ist- und Soll-Feststoffgehalt ein einziger, durch eine Drucktaste (38) umschaltbarer, Leuchtdiodensatz (37) verwendet ist.

20. Vorrichtung nach einem der Ansprüche 17 bis 19, dadurch gekennzeichnet, daß die Anzeige der Nachfüllmenge für Verdünner und/oder Konzentrat durch einen einzigen Leuchtdiodensatz (41) erfolgt und daß dieser Leuchtdiodensatz (41) durch eine Drucktaste (42) zur Anzeige auch der Flußmittel-Gesamtmenge umschaltbar ist.

21. Vorrichtung nach einem der Ansprüche 9 bis 12, dadurch gekennzeichnet, daß Steuerausgänge (31) zum Anschluß eines Kurvenschreibers und/oder von Steuergeräten vorgesehen sind.

## Claims

1. A method for determining the solid matter content in fluxing agents of automatic soldering machines, characterized by the following steps :
   - a certain amount of fluxing agent is withdrawn from a soldering machine ;
   - said amount of fluxing agent is filled into a transparent sample vessel (16) ;
   - said sample vessel (16) having said amount of fluxing agent filled into is radiated through by radiation from an electromagnetic radiation source (21) ;
   - the intensity of the radiation fraction (T) having passed the vessel (16) is measured with a radiation detector (22) ;
   - the radiation fraction (T) measured by the detector (22) is compared with a given standard value, to determine a reference value.

2. A method according to claim 1, characterized by the following steps :
   - to said amount of fluxing agent in the sample vessel (16) is fed a pre-specified amount of a process liquid ;
   - the radiation fraction (T), subsequently measured by the detector (22) is compared with another given standard value, to determine another reference value.

3. A method according to claim 2, characterized by the following steps :
   - the pre-specified amount of process liquid is fed continuously in predetermined time intervals ;
   - each radiation fraction (T), subsequently measured by the detector (22) is compared with each associated standard value, to determine each associated reference value.

4. A method according to claim 3, characterized in that the single discrete reference values determined after each feed of process liquid are recorded in a list for their evaluation.

5. A method according to any of the preceding claims, characterized in that an infrared radiator is used as radiation source (21).

6. A method according to claim 5, characterized in that an infrared-sensitive photodiode is used as radiation detector (22).

7. A method according to any of the preceding claims, characterized in that the determined set of reference values serves to regulate the amount of diluent/amount of concentrate being fed to all solder used within the soldering machine.

8. A method according to any of the preceding claims, characterized in that said determining of sets of reference values, and optionally said regulating the feed of amounts of diluent/concentrate is repeated in predetermined time intervals.

9. A device for carrying out the method according to any of the preceding claims, characterized by

   - a discharging system to take a certain amount out of the soldering machine ;
   - a test tube serving as sample vessel (16) ;
   - an infrared radiator (21) ;
   - an infrared-sensitive photodiode (22) ;
   - a charging device (11 to 14) for the feeding of a pre-specified amount of process liquid ;
   - a comparing device (12) for comparing control value and true value of the amount of process liquid ;
   - a displaying device (34, 35, 36) for displaying the results of measurement.

10. A device according to claim 9, characterized in that said charging device comprises a dosing unit (12) with a storage vessel (11) for the process liquid, and a valve device (13, 14) for dropwise metering the process liquid.

11. A device according to claim 10, characterized in that the charging device (11 to 14) further comprises a light barrier unit (15) for counting the drops of process liquid.

12. A device according to any of the claims 9 to 11, characterized in that potassium hydroxide is used as process liquid.

13. A device according to any of the claims 9 to 12, characterized in that a curve plotter device is provided for continuous recording of the listed reference values.

14. A device according to any of the claims 9 to 13, characterized in that the sample vessel (16) is provided with a circulation set-up (18, 19) consisting of a magnetic coil system (19) being fixed stationary outside the sample vessel (16), and a magnet piece (18) being adjustably fitted in the sample vessel (16).

15. A device according to any of the claims 10 to 14, characterized in that the action of said charging device (11 to 14) can be stopped at reaching a predetermined amount of fed process liquid.

16. A device according to any of the claims 9 to 15, characterized in that at least part of the following components is provided for the evaluation of the listed reference values :
   - a conversion stage (27) for converting the number of drops of process liquid into the required amount of process liquid ;
   - a parameter store (25) for predetermining the control content of solid matter proportions in the flux and/or the total flux amount in the soldering machine ;
   - a calibration factor store (26) for calibration factors for determining the solid matter content from the process liquid consumed, and/or for the conversion of drop number to liquid amount, and/or for adjusting a typical radiation fraction value $(T_{50})$ ;
   - an arithmetic unit (28) for calculating a standardized flux-solid content and/or for determining the required amount of flux to be replenished.

17. A device according to claim 16, characterized in that for displaying of a completed evaluation, each one display device is provided for at least part of the following measured values :
- for the true solid matter content ;
- for the control solid matter content ;
- for the refill amount of diluent ;
- for the refill amount of concentrate ;
- for the total amount od flux in the soldering machine.

18. A device according to claim 17, characterized in that sets of light-emitting diodes (37, 41) serve as display devices.

19. A device according to claims 17 or 18, characterized in that a single set of light-emitting diodes (37) switchable by means of a push-button (38) is used for displaying true and control solid matter content.

20. A device according to any of the claims 17 to 19, characterized in that the display of refill amount for diluent and/or concentrate is effected by a single set of light-emitting diodes (41), and that said set of light-emitting diodes (41) is switchable by a pushbutton (42) to display also the total flux amount.

21. A device according to any of the claims 9 to 12, characterized in that control outputs (31) are provided for connecting a curve plotter and/or control units.

**Revendications**

1. Procédé de détermination de la teneur en matières solides dans les flux de machines à braser automatiques, caractérisé par les étapes suivantes :
- on prélève dans une machine à braser une quantité déterminée du flux,
- on remplit une éprouvette (16) transparente avec ladite quantité de flux,
- on fait traverser l'éprouvette (16) remplie de ladite quantité de flux par un rayonnement provenant d'une source (21) de rayonnement électromagnétique,
- on mesure l'intensité de la fraction (T) de rayonnement qui a traversé l'éprouvette (16), à l'aide d'un récepteur de rayonnement (22),
- on compare la fraction (T) de rayonnement mesurée par le récepteur (T) à une valeur de norme établie à l'avance, pour établir une valeur comparative.

2. Procédé selon la revendication 1, caractérisé par les étapes suivantes :
- on ajoute à ladite quantité de flux dans l'éprouvette (16) une quantité prédéterminée d'un liquide de procédé,
- on compare la fraction de rayonnement (T), mesurée ensuite par le capteur de rayonnement (22), à une autre valeur de norme établie à l'avance, pour établir une autre valeur comparative.

3. Procédé selon la revendication 2, caractérisé par les étapes suivantes :
- on ajoute de façon continue la quantité prédéterminée de fluide de procédé à des intervalles de temps préétablis,
- on compare ensuite chaque fois la valeur de rayonnement (T) obtenue par le capteur de rayonnement (22), à une valeur de norme correspondante, pour obtenir une valeur comparative correspondante.

4. Procédé selon la revendication 3, caractérisé en ce qu'on établit sur un procès-verbal, en vue de leur exploitation, les valeurs comparatives séparées unitaires, obtenues après chaque addition d'une quantité de liquide de procédé.

5. Procédé selon l'une des revendications précédentes, caractérisé en ce qu'on utilise, comme source de rayonnement (21), un émetteur infra-rouge.

6. Procédé selon la revendications 5, caractérisé en ce qu'on utilise, comme récepteur de rayonnement (22), une photodiode sensible à l'infra-rouge.

7. Procédé selon l'une des revendications précédentes, caractérisé en ce qu'on utilise l'ensemble de valeurs comparatives obtenu pour commander la quantité totale de diluant, ou la quantité totale de concentré, à envoyer dans l'agent de brasage utilisé dans la machine à braser.

8. Procédé selon l'une des revendications précédentes, caractérisé en ce qu'on répète, à des intervalles prévus à l'avance, l'obtention d'ensembles de valeurs comparatives, et éventuellement, la commande des envois de diluant, ou de concentré.

9. Dispositif pour la mise en oeuvre du procédé selon l'une des revendications précédentes, caractérisé par :
- un système de prélèvement pour prélever une quantité déterminée de flux dans la machine à braser,
- un tube à essais servant d'éprouvette (16),
- un émetteur d'infra-rouge (21),
- une photodiode sensible au rayonnement infrarouge (22),
- un dispositif additionneur (11 à 14) pour ajouter une quantité prédéterminée de liquide de procédé,
- un dispositif comparateur (12), pour comparer la valeur de consigne et le valeur obtenue de la quantité de liquide de procédé,
- un dispositif indicateur (34, 35, 36), pour indiquer le résultat de mesures.

10. Dispositif selon la revendication 9, caractérisé en ce que le dispositif additionneur comprend une unité de dosage (12), avec un récipient de réserve (11) pour le fluide de procédé, et un dispositif à vannes (13, 14), pour délivrer goutte à goutte le liquide de procédé.

11. Dispositif selon la revendication 10, caractérisé en ce que le dispositif d'addition (11 à 14) comprend en outre une unité à barrière lumineuse (15) pour compter les gouttes de liquide de procédé.

12. Procédé selon l'une des revendications (9 à 11), caractérisé en ce qu'on utilise comme liquide de procédé de l'hydroxyde de potassium.

13. Dispositif selon l'une des revendications 9 à 12, caractérisé en ce qu'il est prévu, pour fixer en continu les valeurs comparatives enregistrées, un dispositif d'inscription de courbes.

14. Dispositif selon l'une des revendications 9 à 13, caractérisé en ce que l'éprouvette (16) est prévue avec un dispositif d'agitation (18, 19) formé d'un système de bobines magnétiques (19) fixé immobile à l'extérieur de l'éprouvette (16), et d'une pièce magnétique (18) mobile à l'intérieur de l'éprouvette (16).

15. Dispositif selon l'une des revendications 10 à 14, caractérisé en ce qu'on peut arrêter l'actionnement du dispositif d'addition (11 à 14), lorsqu'une valeur prédéterminée de la quantité de liquide de procédé ajoutée est atteinte.

16. Dispositif selon l'une des revendications 9 à 15, caractérisé en ce qu'il est prévu, pour l'exploitation des valeurs comparatives enregistrées, au moins une partie des éléments fonctionnels suivants :

– une unité de conversion (27) pour convertir le nombre de gouttes de liquide de procédé en la quantité nécessaire de liquide de procédé,

– une mémoire de paramètres (25) pour fournir la valeur de consigne de la proportion de matière solide dans le flux, et/ou la quantité totale de flux dans le machine de brasage,

– une mémoire de facteur d'étalonnage (26) pour les facteurs d'étalonnage permettant d'établir la teneur en matière solide à partir du liquide de procédé consommé et/ou pour la conversion du nombre de gouttes en quantité de liquide, et/ou pour l'établissement de valeurs typiques de la fraction de rayonnement ($T_{50}$),

– une unité de calcul (28), pour calculer une teneur normalisée en matière solide dans le flux et/ou pour déterminer la quantité de flux nécessaire.

17. Dispositif selon la revendication (16), caractérisé en ce que, pour indiquer une interprétation obtenue, il est prévu un dispositif indicateur pour au moins une partie des données de mesures suivantes:

– pour la teneur en matière solide obtenue,
– pour la teneur en matière solide de consigne,
– pour la quantité nécessaire de diluant,
– pour la quantité nécessaire de concentré,
– pour la quantité totale de flux dans la machine de brasage.

18. Dispositif selon la revendication 17, caractérisé en ce que, comme dispositifs indicateurs, on utilise des ensembles à diodes luminescentes (37, 41).

19. Dispositif selon l'une des revendications 17 ou 18, caractérisé en ce que, pour indiquer les valeurs obtenues et valeurs de consigne de la teneur en matière solide, on utilise un jeu de diodes luminescentes (37) unique, commutable à l'aide d'un bouton-poussoir (38).

20. Dispositif selon l'une des revendications 17 à 19, caractérisé en ce que l'indication des quantités de diluant et/ou de concentré est obtenue à l'aide d'un ensemble unique (41) de diodes luminescentes, et en ce que cet ensemble (41) peut être commuté à l'aide d'un bouton-poussoir (42) pour l'indication de la quantité totale de flux.

21. Dispositif selon l'une des revendications 9 à 12, caractérisé en ce qu'il est prévu des sorties de commande (31) pour connecter un enregistreur de courbes et/ou des dispositifs de commande.

FIG. 1

FIG. 2

FIG. 3